# EUROPÄISCHE PATENTSCHRIFT

(11) **EP 1 514 740 B1**
(45) Veröffentlichungstag und Bekanntmachung des Hinweises auf die Patenterteilung: **25.03.2009**
(21) Anmeldenummer: 04021072.6
(22) Anmeldetag: 04.09.2004
(51) Int. Cl.: B60R 21/13

(54) **Überrollschutzsystem für Kraftfahrzeuge mit einem ausfahrbaren Überrollkörper**
Roll-over protection device for vehicles with an expandable rollbar
Dispositif d'arceau de sécurité pour véhicules avec un arceau déployable

(30) Priorität: 10.09.2003 DE 10342488
(43) Veröffentlichungstag der Anmeldung: 16.03.2005
(73) Patentinhaber: ISE Automotive GmbH, 51702 Bergneustadt (DE)
(72) Erfinder: Jesse, Reiner, 51702 Bergneustadt (DE); Beki, Gurkan, 51702 Bergneustadt (DE)
(74) Vertreter: Fuchs

(56) Entgegenhaltungen:
- EP-A- 0 657 326
- WO-A-02/04259
- US-A- 3 561 806

## Beschreibung

Die Erfindung bezieht sich auf ein Überrollschutzsystem für Personen Kraftfahrzeuge, mit einem verfahrbar gehalterten Überrollkörper, der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine verriegelte obere, schützende Stellung bringbar ist, wobei die Haltevorrichtung ein mit dem Überrollkörper verbundenes Halteglied und ein damit in lösbarer mechanischer Wirkverbindung stehendes Auslöseglied an einem fahrzeugfesten, sensorgesteuerten Aktuator aufweist.

Derartige Überrollschutzsysteme dienen zum Schutz der Insassen in Kraftfahrzeugen ohne schützendes Dach, typischerweise in Cabriolets oder Sportwagen bei einem Überschlag, da das Fahrzeug über den Überrollkörper abrollen wird.

Es ist dabei bekannt, einen die gesamte Fahrzeugbreite überspannenden, fest installierten Überrollbügel vorzusehen. Bei dieser Lösung wird der erhöhte Luftwiderstand und das Auftreten von Fahrgeräuschen als nachteilig empfunden, abgesehen von der Beeinträchtigung des Fahrzeugaussehens.

Es ist auch bekannt, jedem Fahrzeugsitz einen höhenunveränderlich fest installierten Überrollbügel zuzuordnen. Diese Lösung wird typischerweise bei Sportwagen zur Unterstreichung des sportlichen Aussehens eingesetzt.

Weit verbreitet bei Cabriolets sind konstruktive Lösungen, bei denen der Überrollkörper im Normalzustand eingefahren ist, und im Gefahrenfall, also bei einem drohenden Überschlag, schnell in eine schützende Position ausgefahren wird, um zu verhindern, dass die Fahrzeuginsassen durch das sich überschlagende Fahrzeug erdrückt werden.

Von einem derartigen verfahrbaren Überrollkörper geht auch die Erfindung aus.

Diese Überrollschutzsysteme weisen typischerweise einen in einem fahrzeugfesten Führungskörper geführten U-förmigen oder aus einem Profilkörper gebildeten Überrollkörper, auf, wobei der Führungskörper in einem Kassetten-Gehäuse befestigt ist. Dieser Überrollkörper wird im Normalzustand gegen die Vorspannkraft einer Antriebs-Druckfeder durch eine Haltevorrichtung in einer unteren Ruhelage gehalten, und ist im Überschlagfall, sensorgesteuert unter Lösen der Haltevorrichtung, durch die Federkraft der Antriebs-Druckfeder in eine obere, schützende Stellung bringbar, wobei eine dann in Wirkeingriff tretende Verriegelungseinrichtung, die Wiedereinfahrsperre, ein Eindrücken des Überrollbügels verhindert. Dabei ist typischerweise jedem Fahrzeugsitz eine Kassette zugeordnet, insbesondere bei den vorderen Fahrzeugsitzen. Im Fond können die Kassetten auch in einer Rückwand-Baueinheit integriert sein.

Eine derartige Kassetten-Konstruktion eines Überrollbügelschutzsystems mit einem U-förmigen Überrollbügel zeigt beispielsweise die DE 43 42 400 A1; eine alternative Kassettenkonstruktion mit einem Überrollkörper in Form eines Profilkörpers zeigt insbesondere die DE 198 38 989 C1.

Die vorgenannte Haltevorrichtung für die ausfahrbaren Überrollkörper besitzt typischerweise ein am Überrollkörper befestigtes Halteglied, das in lösbarer mechanischer Wirkverbindung mit einem Auslöseglied an einem fahrzeugfesten, sensorgesteuerten Auslösesystem, dem Aktuator, steht, der durch einen Auslösemagneten, den sogenannten Crashmagneten, oder durch ein pyrotechnisches Auslöseglied, gebildet ist. Das Halteglied ist bei zahlreichen Konstruktionen, z.B. gemäß DE 100 12 573 C1, als Haltebolzen ausgebildet, der z.B. über eine Wippe oder ein anderes, Toleranzen ausgleichendes, Verbindungselement mit dem Überrollkörper verbunden ist, und der mit einer das Auslöseglied bildenden Klinke des Aktuators, vorzugsweise eines Doppelklinken-Aktuators nach DE 197 50 693 C1, im lösbaren Wirkeingriff steht.

Bei einem derartigen Klinken-Haltesystem muss zur Auslösung des Überrollkörpers nicht nur der Reibwiderstand zwischen Klinke und Haltebolzen überwunden werden, sondern auch Reibkräfte innerhalb des Auslösegliedes des Aktuators. Ferner besteht typbedingt bei Klinkensystemen die Gefahr des Zurückverriegelns.

Der Erfindung liegt die Aufgabe zugrunde, das eingangs bezeichnete Überrollschutzsystem hinsichtlich der Haltevorrichtung so auszubilden, dass bei einer Auslösung weniger Reibwiderstand als im bekannten Fall zu überwinden ist und keine Gefahr des Zurückverriegelns besteht.

Die Lösung dieser Aufgabe gelingt bei einem Überrollschutzsystem für Personenkraftfahrzeuge mit einem verfahrbar gehalterten Überrollbügel, der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine verriegelte obere, schützende Stellung bringbar ist, wobei die Haltevorrichtung ein mit dem Überrollkörper verbundenes Halteglied und ein damit in lösbarer mechanischer Wirkverbindung stehendes Auslöseglied an einem fahrzeugfesten, sensorgesteuerten Aktuator aufweist, gemäß der Erfindung dadurch, dass dass das Halteglied durch einen im Inneren der Antriebs-Druckfeder aufgenommenen Zugstab mit einer Bohrung am auslöseseitigen Ende und das Auslöseglied durch einen in einer fahrzeugfesten Lagerung mit zwei Lagerstellen gehalterten, formschlüssig in der Bohrung des Zugstabes zwischen beiden Lagerstellen aufnehmbaren und durch den Aktuator in der Lagerung aus einer haltenden, in eine freigebende Wirkstellung längs verschiebbaren Auslösezapfen gebildet ist.

Bei dem erfindungsgemäßen Haltesystem erfolgt das Niederhalten des Überrollkörpers direkt, d.h. ohne Zwischenglieder wie Klinken usw. Zur Auslösung muss nur der Reibwiderstand zwischen dem Auslösezapfen und seiner Lagerung bei seiner axialen Bewegung von der haltenden in die freigebende Wirkstellung überwunden wer den. Ferner besteht keine Gefahr des Zurückverriegelns wie bei Klinkensystemen.

Die DE 43 42 401 A1 zeigt neben einer Ausführungsform eines Hal tesystems mit einer Klinke als Zwischenglied auch ein Haltesystem, bei dem der Auslösestift eines fahrzeugfesten Aktuators in lösbarer Wirkverbindung mit dem Hakenteil eines als Zughaken ausgebildte ten Haltegliedes steht.

Die Verwendung eines Zughakens ermöglicht es, im Gegensatz bei einer Verwendung eines Zugstabes, nicht, ein ohnehin vorhandenes Bauteil des Überrollschutzsystems als Halteglied zu benutzen. Die bei dem erfindungsgemäßen Haltesystem vorgesehene Bohrung im Zugstab gewährleistet eine formschlüssige Aufnahme und damit eine entsprechende sehr stabile Halterung des Auslösezapfens des Aktuators, die erforderlich ist, um ungewollte Fehlauslösungen auf Grund von Schwingungen und Vibrationen zu vermeiden sowie um eine klapperfreie Halterung zu gewährleisten, was im bekannten Fall durch den alleinigen Kraftschluss nicht gegeben ist. Schließlich ist im bekannten Fall nur der Aktuator fahrzeugfest angebracht, wodurch im gehaltenen Zustand starke Scherkräfte an der Halterung des Auslösestiftes im Aktuator entstehen, die ein Verklemmen des Stiftes im Aktuator auslösen können. Dies wird im Fall der Erfindung durch die gesonderte fahrzeugfeste Lagerund des Auslösezapfens vermieden.

Die Erfindung schafft daher ein Haltesystem das nicht anfällig bezüglich Toleranzen ist, und das ein sehr gutes sowie sicheres Langzeitverhalten und eine hohe Funktionssicherheit unter allen Betriebsbedingungen besitzt.

Die WO 02/04259 A1 zeigt ein Überrollschutzsystem für einen Traktor, mit einem massiven U-förmigen Überrollbügel, der zwei starke Schenkelrohre, die jeweils in einem fahrzeugfesten Standrohr aufstellbar gehaltert und kopfseitig über ein rohrförmiges Querjoch miteinander verbunden sind, aufweist. Die Schenkelrohre werden gegen die Kraft einer Antriebs-Druckfeder durch jeweils eine Haltevorrichtung niedergehalten. Jede Haltevorrichtung weist am zugehörigen Schenkelrohr an zwei gegenüberliegenden Positionen jeweils einen pyrotechnischen Aktuator mit einem einziehbaren Auslösestift, der in der Ruhelage des Überrollbügels mit einem das Halteglied bildenden Sackloch im zugehörigen Schenkelrohr in haltender Wirkverbindung steht, auf.
Dieses aufwändig konstruierte Halte-Prinzip ist, unabhängig von der Frage der sicheren synchronen Auslösung von vier Aktuatoren, nicht für Überrollschutzsysteme für Personenkraftwagen geeignet.

Der Auslösezapfen kann auf verschiedene Weise ausgebildet sein. Nach einer ersten Ausführungsform kann er ein separates, d.h. ein von dem Aktuator unabhängiges, loses Bauteil sein. Er kann aber auch nach einer anderen Ausführungsform fest, insbesondere einstückig, mit dem Bewegungselement des Aktuators verbunden sein.

Der Querschnitt des Auslösezapfens sowie seine zugehörigen Lagerstellen und die Bohrung im Zugstab sind vorzugsweise kreisrund ausgebildet, können aber auch eine andere geometrische Konfiguration aufweisen.

Je nach Bauart des Haltesystems wird der Auslösebolzen im Crash-Fall von dem Aktuator aus dem formschlüssigen Wirkeingriff mit der Bohrung in dem Zugstab wahlweise gezogen, gedrückt oder gestoßen, wie es in den Unteransprüchen näher gekennzeichnet ist.

Nach einer ersten Ausgestaltung ist die Bauart mit einem separaten Auslösezapfen so getroffen, dass der separate Auslösezapfen so mit dem Bewegungselement des Aktuators in Wirkverbindung steht, dass er beim Aktivieren des Aktuators aus seiner fahrzeugfesten Halterung von der haltenden in die freigebende Wirkverbindung ausstoßbar ist.

Nach einer zweiten Bauart ist diese so getroffen, dass der Auslösezapfen mit dem Bewegungselement des Aktuators alternativ in die freigebende Wirkstellung vor- oder zurückverschiebbar angeordnet ist. Dabei kann der Auslösezapfen ein gesondertes Bauteil oder mit dem Aktuator fest verbunden sein.

Ist der Auslösezapfen fest mit dem Aktuator verbunden, ist die Bauart vorzugsweise so getroffen, dass der Auslösezapfen beim Aktivieren des Aktuators vollständig aus seiner fahrzeugfesten Halterung von der haltenden in die freigebende Wirkverbindung herausziehbar ist.

Alternativ dazu kann die Bauart auch so getroffen sein, dass der Auslösezapfen zwischen seinen beiden Lagerstellen unterschiedliche, die haltende und freigebende Wirkstellung vorgebende Abschnitte in Verbindung mit einem Freigabeschlitz an der Öffnung des Zugstabes aufweist. Ist dabei der Durchmesser des Auslösezapfens kreisrund, ist die Ausbildung des Systems zweckmäßig so getroffen, dass der Auslösezapfen mindestens einen, den haltenden Wirkeingriff vorgebenden Abschnitt mit einem großen, demjenigen der Bohrung im Zugstab entsprechenden Durchmesser und mindestens einen davon abgesetzten, den freigebenden Wirkeingriff vorgebenden Abschnitt kleineren Durchmessers besitzt, sowie der Zugstab an seinem auslöseseitigen Ende den zur Bohrung führenden Freigabeschlitz aufweist, dessen Breite größer als der kleinere Durchmesser, aber kleiner als der größere Durchmesser des Auslösezapfens ist.

Bei den anderen beschriebenen Bauarten ist dabei der Durchmesser des Auslösezapfens über seine axiale Länge konstant.

Anhand von drei, in den Zeichnungen dargestellten Ausführungsbeispielen soll die Erfindung näher erläutert werden.

Es zeigen:
- Fig. 1: in einer isometrischen Darstellung das erfindungsgemäße Haltesystem eines ausfahrbaren Überrollschutzsystems mit Zugstab und in einer fahrzeugfesten Halterung längs verschiebbarem Auslösezapfen im haltenden Zustand im Figurenteil A und im durch einen Aktuator ausgelösten Zustand im Figurenteil B, in einer ersten Ausführungsform des Auslösezapfens, der durchmesserkonstant ausgebildet ist und zur Auslösung aus seiner Halterung ausgestoßen wird,
- Fig. 2: ein Haltesystem entsprechend Fig. 1, bei dem der Auslösezapfen gemäß einer zweiten Ausführungsform unterschiedliche Durchmesser-Stufen aufweist, und
- Fig. 3: ebenfalls ein Haltesystem entsprechend Fig. 1, bei dem der Auslösezapfen gemäß einer dritten Ausführungsform, durchmesserkonstant ausgebildet, aus seiner Halterung herausziehbar angeordnet ist.

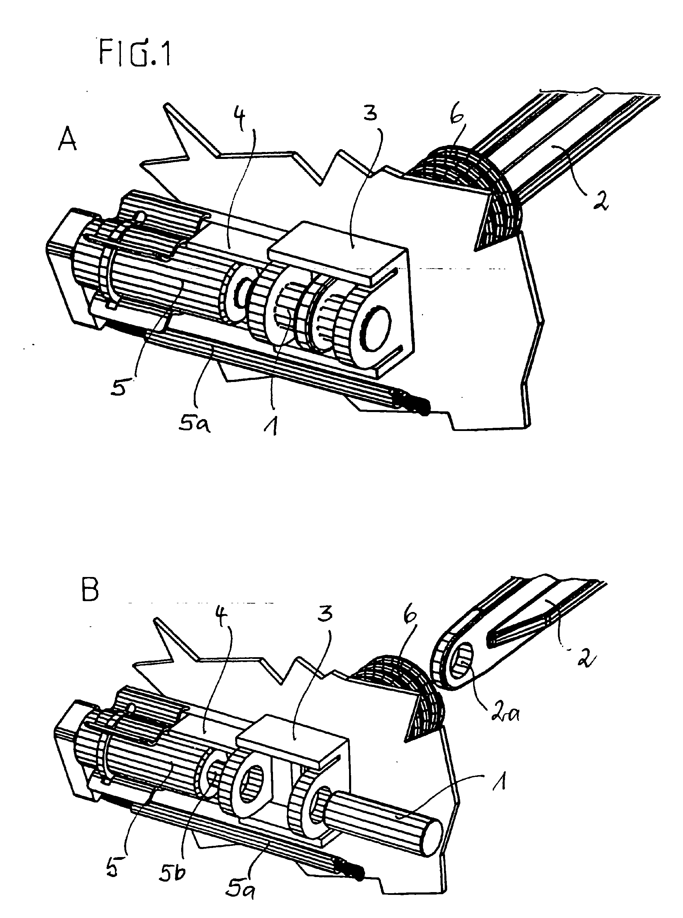

In Fig. 1 ist in zwei Figurenteilen A, B eine erste Ausführungsform der erfindungsgemäßen Haltevorrichtung mit einem durch einen Aktuator ausstoßbaren, durchmesserkonstanten Auslösezapfen 1 als Auslöseglied dargestellt. Der Figurenteil A zeigt dabei den Grundzustand des Überrollschutzsystems, in welchem der (nicht dargestellte) Überrollkörper gegen die Kraft einer mittigen Antriebs-Druckfeder 6 niedergehalten wird, während der Figurenteil B den ausgelösten Zustand zeigt.

Die Haltevorrichtung weist als Halteglied einen Zugstab 2 auf, der mit einem Ende auf geeignete Weise mit dem Überrollkörper mechanisch verbunden ist (nicht dargestellt). Am freien Ende weist der Zugstab 2 eine kreisrunde Öffnung (Bohrung) 2a auf, die einen Durchmesser besitzt, der um einen kleinen Betrag größer als der Durchmesser des Auslösezapfens 1 ist, um einen nicht klemmenden Sitz des Zugstabes 2 auf dem Auslösezapfen 1 zu gewährleisten.

Der Auslösezapfen 1 ist in einem fahrzeugfest angebrachten Lagerbock 3 längsverschiebbar gehaltert. Ebenfalls fahrzeugfest ist eine Halterung 4 für den Aktuator angebracht, der im dargestellten Ausführungsbeispiel durch ein Pyroelement 5 gebildet ist, das eine Zündpille enthält, die über ein Kabel 5a sensorgesteuert zündbar ist.

Die Figuren zeigen ferner die fahrzeugfeste Aufstellfeder 6 in Form einer Schraubenfeder, durch deren Innenraum der Zugstab 2 über eine Öffnung im Lagebock 3 mit dem Auslösezapfen 1 in Wirkeingriff treten kann. Um den Zugstab nicht zu verdecken, ist nur der der Haltevorrichtung zugewandte Teil der Aufstellfeder 6 dargestellt. Tatsächlich übergreift sie den Zugstab 2, der gleichzeitig als Federführungsbolzen dient, über seine Länge, und greift mit dem freien, oberen Ende mittig am Überrollkörper an.

Die Realisierung des Aktuators durch ein pyrotechnisches Element 5 ist ein bevorzugtes Ausführungsbeispiel, da dieses durch seinen Energieüberschuss sicher in der Lage ist, den Auslösezapfen zu verschieben, auch unter einer starken Vorspannung der Aufstellfedern für den Überrollkörper. Grundsätzlich kann jedoch auch ein sogenannter Auslösemagnet oder ein anderes schnelles Antriebssystem hydraulisch, pneumatisch, motorisch vorgesehen werden.

Im Haltezustand (Figurenteil A) liegt ein Formschluss zwischen der Bohrung 2a des Zugstabes 2 und dem Auslösezapfen 1 vor, d.h. der Zugstab 2 wird gegen die Vorspannkraft der (nicht dargestellten) Aufstellfedern durch den Auslösezapfen 1 gehalten und am Ausfahren gehindert.

Wird das Pyroelement 5 gezündet, stößt es einen Stift 5b aus, der wiederum den Auslösezapfen 5 nach rechts aus dem Lagerbock 3 ausstößt. Dadurch wird der Formschluss mit dem Zugstab 2 aufgehoben, wodurch dieser gewollt ausfährt (Figurenteil B).

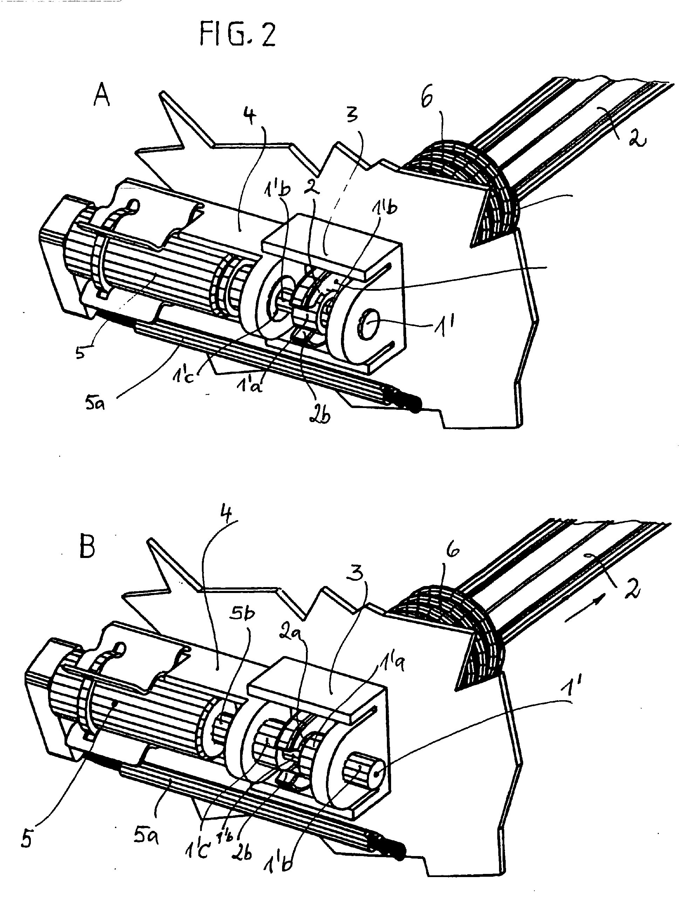

In Fig. 2 ist ebenfalls in zwei Figurenteilen A, B eine zweite Ausführungsform der Erfindung dargestellt, bei welcher der Auslösezapfen nicht, wie im Fall der Fig. 1, durchmesserkonstant, sondem axial im Durchmesser gestuft ausgebildet ist.

Dieser gestufte Auslösezapfen 1' besitzt einen mittleren Abschnitt 1'a, der auf den Durchmesser der Bohrung 2a in dem Zugstab 2 abgestimmt ist, und an den sich zu beiden Seiten Abschnitte 1'b mit kleinerem Durchmesser anschließen, wobei der rechte Abschnitt 1'b und links ein durchmessergrößerer Abschnitt 1'c in dem Lagerbock 3 die Lagerstellen des Auslösezapfens 1' bilden. Die Bohrung 2a im Zugstab 2 besitzt einen Schlitz 2b, dessen Breite auf den schmäleren Durchmesser der Zapfenabschnitte 1'b abgestimmt ist. Im übrigen zeigt die Figur 2 die bereits in Fig. 1 dargestellten Komponenten.

Im Grundzustand (Figurenteil A) besteht ein Formschluss zwischen dem Abschnitt 1'a des Auslösezapfens und der Bohrung 2a, d.h. der durch den Auslösezapfen 1' gehaltene Zugstab 2 wird am Ausfahren gehindert. Da der Schlitz 2b schmaler ist als der Durchmesser des Zapfenabschnittes 1'a, bleibt der Formschluss erhalten.

Wird das pyrotechnische Element 5 gezündet, verschiebt der dabei ausgestoßene Stift 5b den Auslösezapfen 1' nach rechts, wobei dessen Lagerung im Lagerbock 3 erhalten bleibt. Dabei gelangt die Bohrung 2a des Zugstabes 2 in den Zapfenbereich 1'b mit kleinerem Durchmesser. Dadurch kommt der Zugstab über den Schlitz 2b frei und kann ausfahren (Figurenteil B).

Der Auslösestift 5b und der Auslösezapfen 1' können zwei getrennte Teile sein.

Der Auslösezapfen 1' kann auch einstückig mit dem Auslösestift 1'c verbunden sein.

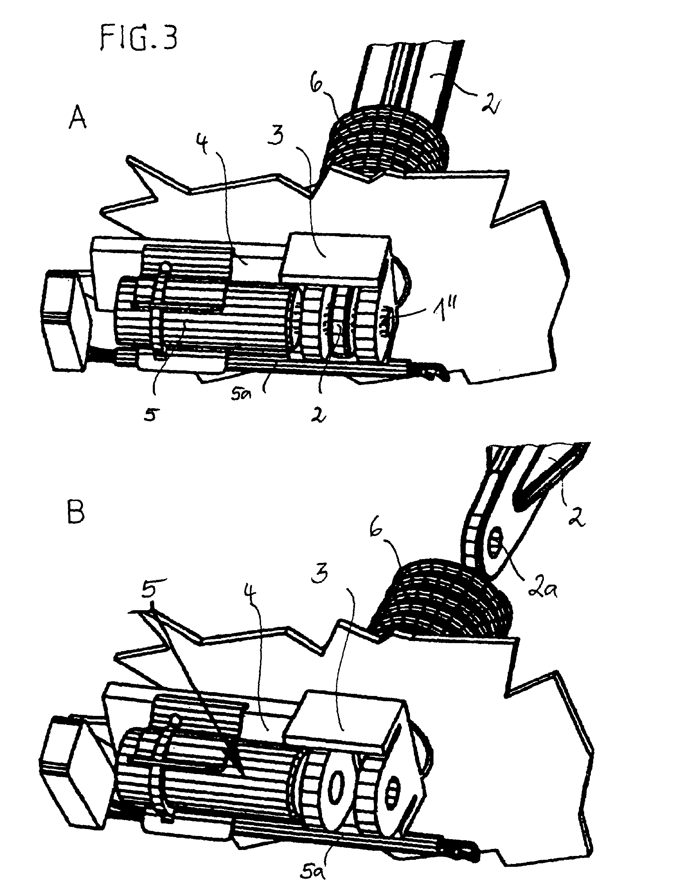

In Fig. 3 ist in zwei Figurenteilen A, B ein drittes Ausführungsbeispiel der erfindungsgemäßen Halte- und Auslösevorrichtung dargestellt, bei dem der Aktuator 5 stifteinziehend ausgebildet ist und der Auslösezapfen 1" mit dem einziehbaren Stift fest verbunden ist. Im übrigen zeigt die Fig. 3 ebenfalls die bereits in Fig. 1 dargestellten Komponenten.

Wie im Fall der Fig. 1 weist der Auslösezapfen 1" einen durchgehend konstanten Durchmesser, angepasst an den der Öffnung 2a des Zugstabes 2 auf. Im Grundzustand (Figurenteil A) ist daher die Öffnung 2a formschlüssig mit dem Auslösezapfen 1" verbunden, der ein Ausfahren des Zugstabes 2 und damit des Überrollkörpers verhindert. Wird der Auslösezapfen sensorgesteuert von dem Aktuator 5 eingezogen (Figurenteil B), kommt der Zugstab 2 frei und kann ausfahren.

## Patentansprüche

1. Überrollschutzsystem für Personenkraftfahrzeuge, mit einem verfahrbar gehalterten Überrollkörper, der im Normalzustand gegen die Kraft von mindestens einer vorgespannten Antriebs-Druckfeder (6) durch eine Haltevorrichtung in einer unteren, eingefahrenen Ruhelage haltbar ist, und unter Lösen der Haltevorrichtung durch die Federkraft der Antriebs-Druckfeder in eine verriegelte obere, schützende Stellung bringbar ist, wobei die Haltevorrichtung ein mit dem Überrollkörper verbundenes Halteglied und ein damit in lösbarer mechanischer Wirkverbindung stehendes Auslöseglied an einem fahrzeugfesten, sensorgesteuerten Aktuator aufweist, **dadurch gekennzeichnet, dass** das Halteglied durch einen im Inneren der Antriebs-Druckfeder aufgenommenen Zugstab (2) mit einer Bohrung (2a) am auslöseseitigen Ende und das Auslöseglied durch einen in einer fahrzeugfesten Lagerung (3) mit zwei Lagerstellen gehalterten, formschlüssig in der Bohrung (2a) des Zugstabes (2) zwischen beiden Lagerstellen aufnehmbaren und durch den Aktuator (5) in der Lagerung (3) aus einer haltenden, in eine freigebende Wirkstellung längs verschiebbaren Auslösezapfen (1, 1', 1") gebildet ist.

2. Überrollschutzsystem nach Anspruch 1, **dadurch gekennzeichnet, dass** der Auslösezapfen (1, 1') ein separates Bauteil ist.

3. Überrollschutzsystem nach Anspruch 1, **dadurch gekennzeichnet, dass** der Auslösezapfen (1', 1 ") fest mit dem Bewegungselement (5b) des Aktuators (5) verbunden ist.

4. Überrollschutzsystem nach Anspruch 2, **dadurch gekennzeichnet, dass** der separate Auslösezapfen (1) so mit dem Bewegungselement (5b) des Aktuators (5) in Wirkverbindung steht, dass er beim Aktivieren des Aktuators (5) aus seiner fahrzeugfesten Halterung (3) von der haltenden in die freigebende Wirkverbindung ausstoßbar ist.

5. Überrollschutzsystem nach Anspruch 2 oder 3, **dadurch gekennzeichnet, dass** der Auslösezapfen (1', 1") mit dem Bewegungselement des Aktuators (5) alternativ in die freigebende Wirkstellung vor oder zurückverschiebbar angeordnet ist.

6. Überrollschutzsystem nach Anspruch 3 und 5, **dadurch gekennzeichnet, dass** die Anordnung so getroffen ist, dass der Auslösezapfen (1") beim Aktivieren des Aktuators vollständig aus seiner fahrzeugfesten Halterung (3) von der haltenden in die freigebende Wirkverbindung herausziehbar ist.

7. Überrollschutzsystem nach Anspruch 5, **dadurch gekennzeichnet, dass** der Auslösezapfen (1') zwischen seinen beiden Lagerstellen unterschiedliche, die haltende und freigebende Wirkstellung vorgebende Abschnitte (1'a, 1'b) in Verbindung mit einem Freigabeschlitz (2b) an der Öffnung (2a) des Zugstabes (2) aufweist.

8. Überrollschutzsystem nach einem der Ansprüche 1 bis 7, **dadurch gekennzeichnet, dass** der Auslösezapfen (1, 1', 1 ") sowie seine Lagerstellen und die zugehörige Bohrung (2a) im Zugstab (2) kreisrund ausgebildet sind.

9. Überrollschutzsystem nach Anspruch 8, **dadurch gekennzeichnet, dass** der Durchmesser des Auslösezapfens (1, 1") über seine axiale Länge konstant ist.

10. Überrollschutzsystem nach Anspruch 7 und 8, **dadurch gekennzeichnet, dass** der Auslösezapfen (1') mindestens einen, den haltenden Wirkeingriff vorgebenden Abschnitt (1'a) mit einem großen, demjenigen der Bohrung (2a) im Zugstab (2) entsprechenden Durchmesser und mindestens einen davon abgesetzten, den freigebenden Wirkeingriff vorgebenden Abschnitt (1'b) kleineren Durchmessers besitzt, sowie der Zugstab (2) an seinem auslöseseitigen Ende den zur Bohrung (2a) führenden Freigabeschlitz (2b) aufweist, dessen Breite größer als der kleinere Durchmesser, aber kleiner als der größere Durchmesser des Auslösezapfens (1') ist.

## Claims

1. A roll-over protection system for passenger cars, having a retractably mounted roll-over body, which in the normal state is retainable by a holding device in a lower, retracted position of rest against the force of at least one pre-tensioned driving compression spring (6), and on release of the holding device is able to be brought by the spring force of the driving compression spring into an upper, locked protective position, wherein the holding device comprises a holding member connected to the roll-over body and a release member in releasable mechanical operative connection with the holding member, the release member being provided on a sensor-controlled actuator arranged securely on the vehicle, **characterised in that** the holding member is formed by a tension rod (2) received inside the driving compression spring and having a bore (2a) at the release end, and the release member is formed by a release pin (1, 1', 1") that is mounted in a mounting (3) with two bearing points arranged securely on the vehicle, is positively receivable in the bore (2a) of the tension rod (2) between the two bearing points and is longitudinally displaceable in the bearing (3) by the actuator (5) from a retaining operative position into a releasing operative position.

2. A roll-over protection system according to claim 1, **characterised in that** the release pin (1, 1') is a separate component.

3. A roll-over protection system according to claim 1, **characterised in that** the release pin (1, 1 ") is fixedly connected to the moving element (5b) of the actuator (5).

4. A roll-over protection system according to claim 2, **characterised in that** the separate release pin (1) is in operative connection with the moving element (5b) of the actuator (5) in such a way that on actuation of the actuator (5) it is ejectable from its mounting (3) arranged securely on the vehicle from the retaining operative position into the releasing operative position.

5. A roll-over protection system according to claim 2 or 3, **characterised in that** the release pin (1' 1 ") is arranged with the moving element of the actuator (5) alternatively in the releasing operative position so as to be displaceable forwards or backwards.

6. A roll-over protection system according to claims 3 and 5, **characterised in that** the arrangement is designed such that on activation of the actuator the release pin (1 ") can be drawn fully out of its mounting (3) arranged securely on the vehicle from the retaining operative position into the releasing operative position.

7. A roll-over protection system according to claim 5, **characterised in that** between its two bearing points the release pin (1') has different sections (1'a, 1'b) allowing the retaining and releasing operative position combined with a release slot (2b) at the opening (2a) of the tension rod (2).

8. A roll-over protection system according to any one of claims 1 to 7, **characterised in that** the release pin (1, 1', 1 ") and its bearing points and the associated bore (2a) in the tension rod (2) are of circular construction.

9. A roll-over protection system according to claim 8, **characterised in that** the diameter of the release pin (1, 1 ") is constant over its axial length.

10. A roll-over protection system according to claims 7 and 8, **characterised in that** the release pin (1') has at least one section (1'a) having a large diameter corresponding to that of the bore (2a) in the tension rod (2) and allowing the retaining operative engagement and at least one section (1'b) offset therefrom of smaller diameter allowing the releasing operative engagement, and the tension rod (2), at its release end, has the release slot (2b) leading to the bore (2a), the width of the release slot being larger than the smaller diameter, but smaller than the larger diameter of the release pin (1').

## Revendications

1. Système de protection anti-renversement pour voitures particulières, avec un corps anti-renversement retenu de façon déplaçable, qui peut être retenu à l'état normal contre la force d'au moins un ressort de pression d'entraînement (6) précontraint par un dispositif de retenue dans une position de repos inférieure, rentrée, et qui peut être amené dans une position de protection, supérieure, verrouillée, par le déblocage du dispositif de retenue par la force de ressort du ressort de pression d'entraînement, dans lequel le dispositif de retenue présente un élément de retenue relié au corps anti-renversement et un élément de déclenchement se trouvant en relation fonctionnelle mécanique déblocable avec celui-ci à un actionneur commandé par capteur et solidaire du véhicule, **caractérisé en ce que** l'élément de retenue est formé par une barre de traction (2) reçue à l'intérieur du ressort de pression d'entraînement et ayant un alésage (2a) à l'extrémité côté déclenchement, et l'élément de déclenchement est formé par une cheville de déclenchement (1, 1', 1"), retenue dans un palier (3) solidaire du véhicule avec deux points d'appui, pouvant être reçue par complémentarité de forme dans l'alésage (2a) de la barre de traction (2) entre les deux points d'appui, et pouvant être déplacée longitudinalement par l'actionneur (5) dans le palier (3) d'une position à effet de retenue à une position à effet de déblocage.

2. Système de protection anti-renversement selon la revendication 1, **caractérisé en ce que** la cheville de déclenchement (1, 1') est un composant séparé.

3. Système de protection anti-renversement selon la revendication 1, **caractérisé en ce que** la cheville de déclenchement (1', 1") est reliée solidement à l'élément de mouvement (5b) de l'actionneur (5).

4. Système de protection anti-renversement selon la revendication 2, **caractérisé en ce que** la cheville de déclenchement séparée (1) se trouve en relation fonctionnelle avec l'élément de mouvement (5b) de l'actionneur (5) de telle sorte que lors de l'activation de l'actionneur (5), elle peut être expulsée de son dispositif de retenue (3) solidaire du véhicule de la relation fonctionnelle de retenue à la relation fonctionnelle de déblocage.

5. Système de protection anti-renversement selon la revendication 2 ou 3, **caractérisé en ce que** la cheville de déclenchement (1', 1") est disposée en pouvant être avancée ou reculée en alternance dans la position à effet de déblocage par l'élément de mouvement de l'actionneur (5).

6. Système de protection anti-renversement selon les revendications 3 et 5, **caractérisé en ce que** l'agencement est réalisé de telle sorte que lors de l'activation de l'actionneur, la cheville de déclenchement (1") peut être sortie complètement de son dispositif de retenue (3) solidaire du véhicule de la relation fonctionnelle de retenue à la relation fonctionnelle de déblocage.

7. Système de protection anti-renversement selon la revendication 5, **caractérisé en ce que** la cheville de déclenchement (1') présente entre ses deux points d'appui différentes sections (1'a, 1'b) spécifiant la position à effet de retenue et la position à effet de déblocage en conjonction avec une fente de déblocage (2b) à l'ouverture (2a) de la barre de traction (2).

8. Système de protection anti-renversement selon l'une quelconque des revendications 1 à 7, **caractérisé en ce que** la cheville de déclenchement (1, 1', 1") ainsi que ses points d'appui et l'alésage associé (2a) sont réalisés de façon circulaire dans la barre de traction (2).

9. Système de protection anti-renversement selon la revendication 8, **caractérisé en ce que** le diamètre de la cheville de déclenchement (1, 1") est constant sur sa longueur axiale.

10. Système de protection anti-renversement selon les revendications 7 et 8, **caractérisé en ce que** la cheville de déclenchement (1') possède au moins une section (1'a) spécifiant la mise en prise à effet de retenue et ayant un grand diamètre correspondant à celui de l'alésage (2a) dans la barre de traction (2), et au moins une section (1'b) décalée par rapport à celle-ci, spécifiant la mise en prise à effet de déblocage et ayant un diamètre plus petit, et la barre de traction (2) présente à son extrémité côté déclenchement la fente de déblocage (2b) menant à l'alésage (2a) et dont la largeur est supérieure au diamètre plus petit, mais inférieure au diamètre plus grand de la cheville de déclenchement (1').
